(19)

Europäisches Patentamt
European Patent Office
Office européen des brevets

(11)  **EP 4 118 357 B1**

(12)  **EUROPEAN PATENT SPECIFICATION**

(45) Date of publication and mention
of the grant of the patent:
**13.09.2023  Bulletin 2023/37**

(21) Application number: **22703449.3**

(22) Date of filing: **24.01.2022**

(51) International Patent Classification (IPC):
**F16F 7/108** (2006.01)     **B64C 1/40** (2006.01)

(52) Cooperative Patent Classification (CPC):
**F16F 7/108; B64C 1/40**

(86) International application number:
**PCT/IB2022/050588**

(87) International publication number:
**WO 2022/195361 (22.09.2022 Gazette 2022/38)**

(54) **PASSIVE VIBRATION DAMPING DEVICE FOR AIRCRAFT**

PASSIVE SCHWINGUNGSDÄMPFUNGSVORRICHTUNG FÜR FLUGZEUGE

DISPOSITIF D'AMORTISSEMENT DE VIBRATIONS PASSIF POUR AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.03.2021  IT 202100006680**

(43) Date of publication of application:
**18.01.2023  Bulletin 2023/03**

(73) Proprietor: **Leonardo S.p.A.
00195 Roma (IT)**

(72) Inventors:
  • **GRAVAGNONE, Nicola
    80128 Napoli (IT)**

  • **DI GIULIO, Massimiliano
    81055 Santa Maria Capua Vetere (Caserta) (IT)**

(74) Representative: **Verdecchia, Valerio et al
Jacobacci & Partners S.p.A.
Corso Emilia, 8
10152 Torino (IT)**

(56) References cited:
EP-A2- 0 131 795          DE-A1- 2 610 212
DE-A1-102008 058 470      DE-A1-102008 061 406
DE-C1- 19 957 774         DE-U- 1 953 028
US-A- 4 946 345           US-A1- 2011 079 477
US-A1- 2019 003 547       US-A1- 2021 025 469

**Description**

Technical field

This invention relates to a passive vibration damping device for an aircraft or airplane, in order to reduce noise and improve comfort for the occupants. In particular, a device for damping vibrations may be applied to propeller-driven or rotary wing aircraft or in general to aircraft which have rotating components, which aircraft generally have high levels of noise.

Prior art

In the field of aeronautical applications, in particular for aircraft which have a rotating component, devices for mitigating the noise and/or absorbing the vibrations are generally known.

Indeed, it is known that the noise perceived in the cabin by the passengers and by the flight attendants, or in general by the occupants, depends on the excitation of the vibrational modes of the air present in the cabin (known as the acoustic cavity).

The acoustic cavity surrounds the occupants of the aircraft, and in turn is surrounded by the aircraft structure which, when vibrating, acts as a loudspeaker. Acting on the structural vibrations will therefore make it possible to acoustically modify the response of the cavity.

The structural vibrations are induced by different kinds of loads, and loads induced by the rotating components of engines or motors that are provided with blades, for example a rotor, a propeller or a compressor, are one of the main kinds of loads. There are two types of path for the vibrational loads from the rotating components of an engine: a structure-borne path and an airborne path.

The airborne loads on a turboprop aircraft are linked to the blade passing frequencies (BPF) which are well defined and are normally such that they vibrate the floor beams and the frames of the aeronautical structure, in particular the fuselage. As known to a person skilled in the art, the fundamental blade passing frequency ($BPF_1$), i.e. the first blade passing frequency, depends solely on the number of rotations of the engine and on the number of blades of the rotating component. Together with the fundamental blade passing frequency ($BPF_1$), a person skilled in the art also knows the further relative higher harmonics which define higher blade passing frequencies (known as $BPF_2$, $BPF_3$, ..., $BPF_i$).

In order to solve this problem and reduce these vibrations and the noise that the occupants perceive to a minimum, various devices are used, generally passive dampers known as pendulums, or dynamic vibration absorbers (DVA); however, current devices are only able to absorb or damp the vibrations caused by one frequency at a time, and are not able to damp the vibrations induced by the other vibrational modes, in particular those caused by the highest blade passing frequencies, which are generally not negligible. In fact, the known devices are comparable to mass-spring systems which have a single natural frequency that is equal to the frequency to be damped, or the target frequency, or the main frequency of the noise source, or, in the case of a blade, the first blade passing frequency ($BPF_1$) according to the formula:

$$\mathrm{BPF} = f_n = \frac{1}{2\pi}\sqrt{\frac{k}{m}}$$

where $f_n$ denotes the natural frequency of the mass-spring damping system, BPF denotes the blade passing frequency, k denotes the stiffness of the damper system and m denotes the mass of said system.

Prior devices for absorbing vibrations of various frequencies are known, for example, from the patent publication CA2087669C, filed in the name of the same applicant, and from the US patent application US 2019 0277364 A1, in the name of TEXTRON.

Further devices are known, for example, from the patent publications DE 10 2008 058470 A1, US 2019/003547 A1, and DE 19 53 028 U.

CA2087669C proposes a TVA (tuned vibration absorber) device model which is rather complex in terms of its construction and implementation solution, and has the special feature of acting on natural frequencies. It consists essentially of a flexible bar, a series of devices fixed to the flexible bar in a cantilevered position with respect to the structure on which it is mounted, and a pendulum which, being suitably dimensioned (or the moment of bending inertia and the moment of angular inertia thereof being suitably designed), makes it possible to act on the first two harmonics of the propeller, or on the first two natural frequencies ($BPF_1$ and $BPF_2$) of this rotating component. Moreover, the solution described in US 2019 02773 64 A1 in the name of TEXTRON proposes a system comprising four masses (two each of two of different dimensions) which make it possible to tune the tuned vibration absorber (TVA) on the first two harmonics (BPFi and $BPF_2$) of the propeller. The TVA is mounted on a beam structure on which, by suitably moving and dimensioning the masses, it is possible to obtain different tuning frequency intervals.

However, as is the case with other known devices, these publications in the patent literature describe devices which are not able to damp vibrations at different frequencies simultaneously.

Moreover, the devices presented and shown in the prior art are decidedly bulky and complex in terms of construction, which imposes stringent design and installation constraints on the user.

Summary of the invention

The object of this invention is to provide a damping device which does not have the drawbacks of the prior art.

A further object of the invention is to provide a passive damping device which is less bulky and in general easier to mount on an aircraft.

A further object of the invention is to provide an aircraft which comprises an engine component comprising a plurality of blades and comprises a passive damping device adapted to damp noise produced by said engine component at a plurality of frequencies simultaneously.

These and other objects are fully achieved according to this invention by virtue of a damping device as defined in claim 1 and by virtue of an aircraft as defined in claim 7.

Advantageous embodiments of the invention are specified in the dependent claims, the content of which is to be understood as an integral part of the following description.

In short, the invention is based on the idea of providing a passive multi-frequency damping device for damping vibrations of an aircraft, which device is in particular adapted to absorb vibrations from the air present in the cabin of an aircraft, the damping device comprising:

a support structure;
a plurality of N damping masses of a metallic material, each having a respective n-th mass, wherein N is a natural number greater than or equal to 2, and n is a natural number from 1 to N;
a plurality of N elastic elements each having a respective n-th stiffness;
wherein each n-th elastic element is glued to both the support structure and a respective n-th damping mass in order to support said respective n-th damping mass on the support structure so that the former is free to vibrate relative to the latter;
wherein, for each n from 2 to N, each n-th damping mass of said plurality of damping masses is arranged to at least partially surround an n-1-th damping mass of said plurality of damping masses, and
wherein the first damping mass has a cylindrical shape with a first height and with a semi-circular cross section, or has a solid semi-cylindrical shape, and wherein each one of the remaining N-1 damping masses of said plurality of damping masses has a cylindrical shape with a respective height and with a cross-section of a arc of, or sector of, annulus, or has a hollow, semi-cylindrical shape.

Essentially, therefore, the damping masses are arranged telescopically, such that a first damping mass is supported on the plate, and each following n-th damping mass is arranged so as to surround an n-1-th damping mass only laterally and is supported on respective opposite sides on the support structure.

According to the invention, the first damping mass has a cylindrical shape, with cylinder being understood to mean any volume obtained by extrusion or the projection of a cross section along a portion of straight line transverse to said cross section, with a first height, and with a semi-circular cross section, and the remaining N-1 damping masses each have a cylindrical shape having a respective height and a cross-section of an arc of, or sector of, annulus.

Preferably, for each n from 2 to N, the cross section of arc of, or sector of, annulus of the n-th damping mass has an inner radius substantially equal to or slightly greater than an outer radius of the n-1-th damping mass. Even more preferably, the first height of the first damping mass and the respective heights of the other N-1 damping masses of the plurality of damping masses are all equal. Essentially, therefore, according to the invention, the damping masses are formed as cylindrical bodies which all have the same height and have cross sections such that the first damping mass is supported directly by the support structure and, for n from 2 to N, each n-th damping mass at least partially surrounds an n-1-th damping mass in a transverse or lateral direction, and is supported on the two lateral or transverse sides or ends by the support structure.

Furthermore, for each n from 2 to N, the n-th mass of each damping mass of said plurality of damping masses is advantageously a multiple of the mass of the first damping mass.

According to a further aspect of the invention, the damping device is mounted on board an aircraft comprising an engine component that comprises a plurality of blades and is adapted to rotate about an axis of rotation thereof to provide thrust to said aircraft, and the masses and the stiffnesses of the damping masses and, respectively, of the elastic elements are such that, for each n from 1 to N, the n-th mass of each n-th damping mass and the n-th stiffness of the respective elastic element supporting said n-th damping mass on the support structure are such that the square root of the ratio of said n-th stiffness to said n-th mass is proportional to a different blade passing frequency ($BPF_1$, $BPF_2$, $BPF_3$, ..., $BPFi$) of said engine component.

In this case, said engine component is preferably a rotor or a propeller or a compressor (fan).

Brief description of the drawings

The features and advantages of this invention will be clarified by the following detailed description, given purely by way of non-limiting example and with reference to the accompanying drawings, in which:

Fig. 1 is an axonometric view of a damping device according to a first embodiment of the invention;
Fig. 2 is an exploded view of the damping device in Fig. 1; and
Fig. 3 is an axonometric view of a damping device according to a further embodiment of the invention.

## Detailed description

In general, in the present description and in the accompanying claims, terms such as 'lower', 'outer', 'inner', 'radial', 'radially', 'transverse', 'transversely' and the like are used with the usual meaning in the relevant technical field.

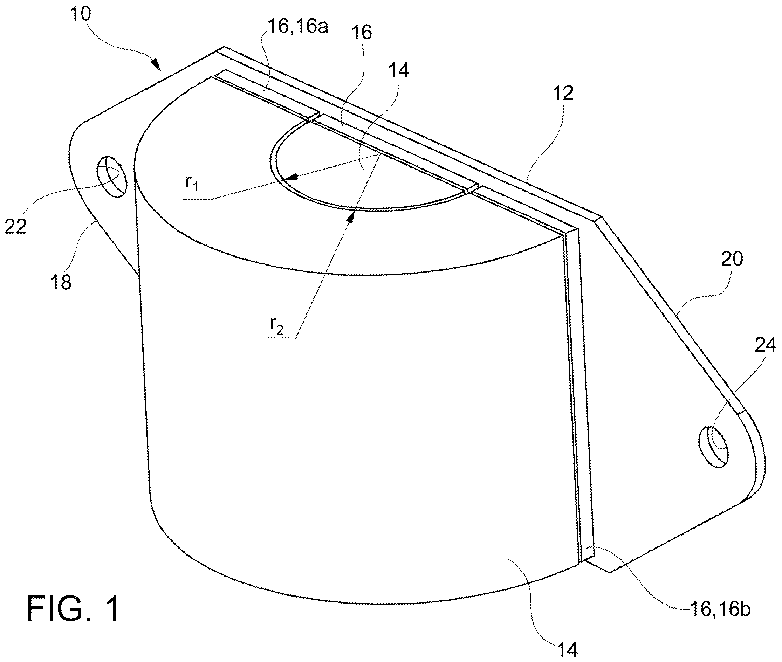

With reference to Fig. 1 to 3, the passive multi-frequency damping device for damping vibrations of an aircraft according to the invention is generally indicated by reference sign 10.

The damping device 10 is particularly adapted to absorb said vibrations to be damped from the air present in the cabin of an aircraft, and essentially comprises a support structure 12, a plurality of damping masses 14, and a plurality of elastic elements 16.

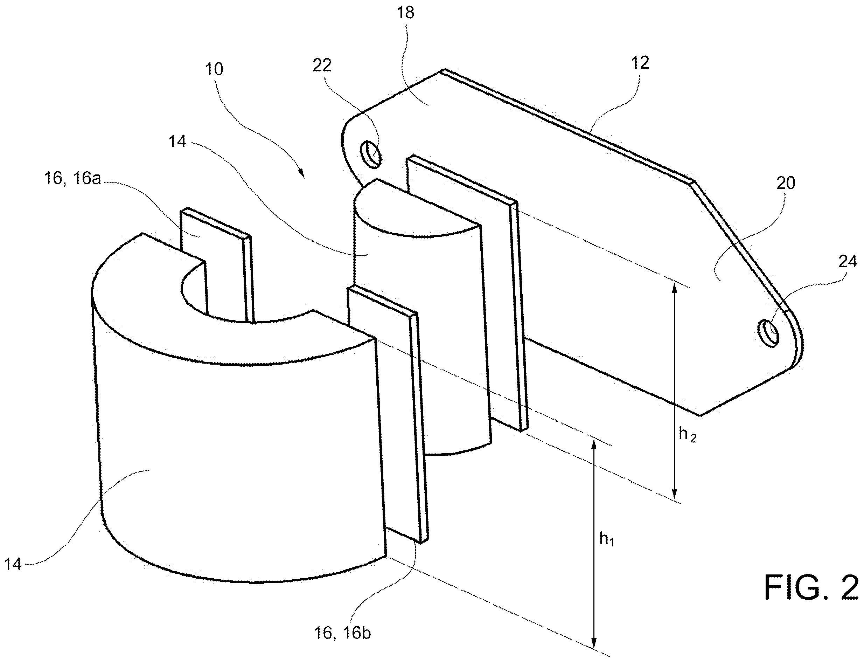

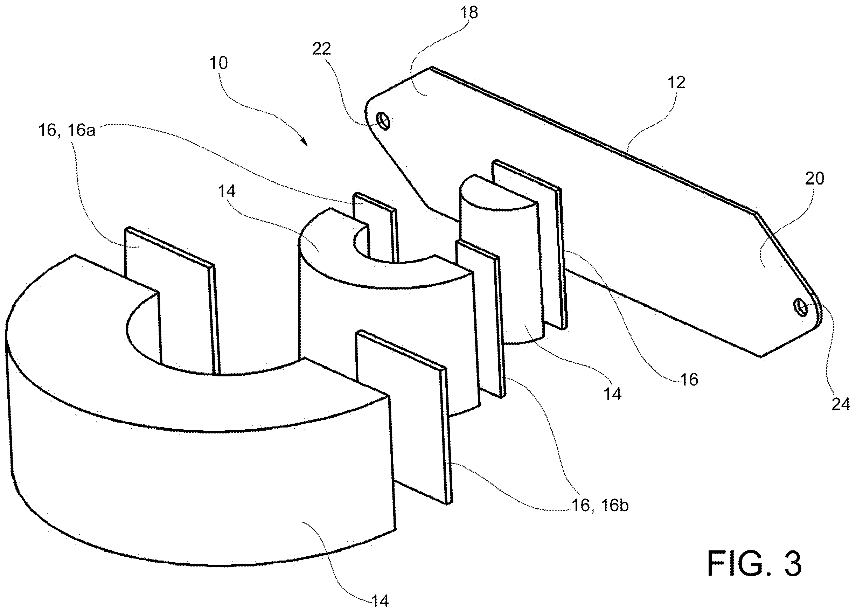

In particular, the damping device 10 comprises a number N of damping masses 14, where N is a natural number greater than or equal to 2, for example 2, 3, 4 or 5, etc., and the same number N of elastic elements 16. As may be seen in Fig. 1 and 2, the damping device 10 may comprise two damping masses 14 and two respective elastic elements 16, for example. As may be seen in Fig. 3, it is also possible for the damping device 10 to comprise three damping masses 12 and three respective elastic elements 16, for example.

The support structure 12 is designed such that it may be connected to the core of a structural element, for example a frame, a floor beam or an intercostal of the aircraft, and such that it may support or uphold said damping masses 14 such that they are free to vibrate or oscillate with respect to said support structure 12. The support structure 12 is preferably in the form of a metal plate which has two respective side wings 18 and 20, on each of which a respective circular through hole 22 and 24 is provided. In this way, by using known threaded or non-threaded mechanical connection means such as screws, rivets, Hi-Lok fasteners and/or bolts, it is possible to fix the support structure 12 to an inner wall of the interior compartment or the cabin of the aircraft or to a structural element as described above.

The damping masses 14 are made of a metal material, preferably a high-density metal material so as to be able to provide a large mass without necessarily occupying a large space. The damping masses 14 are preferably made of a metal having a high specific weight, for example tungsten.

According to the invention, the damping masses 14 are shaped such that, for each n from 2 to N, each n-th damping mass 14 of said plurality of damping masses 14 is arranged to at least partially surround an n-1-th damping mass 14 of said plurality of damping masses 14. Indeed, as may be seen in Fig. 1 and 2, a second damping mass 14 laterally or radially surrounds a first damping mass 14, and, as may be seen in Fig. 3, not only a second damping mass 14 laterally or radially surrounds a first damping mass 14 but also a third damping mass 14 radially or laterally surrounds the second damping mass 14. Essentially, with the exception of a first damping mass 14, each following damping mass 14 is arranged telescopically with respect to the previous damping mass, so as to reduce the radial dimensions of the damping device 10 to a minimum.

According to the invention, the damping masses 14 all have a cylindrical shape, or a three-dimensional shape which may be obtained by extruding a base cross section in space; in the embodiment shown in the figures, these are orthogonal cylinders. In particular, it is possible to use a solid or hollow semi-cylindrical shape.

As mentioned above, the first damping mass 14 has a cylindrical shape with a first height $h_i$ and with a semi-circular cross section, or substantially has a solid semi-cylindrical shape, and each one of the remaining damping masses 14 has a cylindrical shape with a respective height $h_n$ and with a cross section of a arc of, or sector of, annulus, i.e. they have substantially a hollow semi-cylindrical shape.

In a preferable embodiment, each damping mass 14 has the same height as the other damping masses 14.

Furthermore, for each n from 2 to N, the cross section of arc of, or of sector of, annulus of the n-th damping mass 14 preferably has an inner radius $r_n$ substantially equal to or slightly greater than an outer radius $r_{n-1}$ of the n-1-th damping mass 14. Substantially, therefore, as shown in Fig. 1 and 2 (for the case where N = 2) and in Fig. 3 (for the case where N = 3), the circular sector cross section of the second damping mass 14 has an inner radius $r_2$ substantially equal to or slightly greater than an outer radius $r_1$ of the first damping mass 14, and the circular sector cross section of the third damping mass 14 has an inner radius substantially equal to or slightly greater than an outer radius of the second damping mass 14.

Each damping mass 14 has a respective n-th mass $m_n$, and each elastic element 16 likewise has a respective n-th elastic stiffness $k_n$.

The elastic elements 16 are glued to both the support structure 12 and a respective damping mass 14; therefore, the first elastic element 16 is glued to both the support structure 12 and the first damping mass 14, the second elastic element 16 is glued to both the support structure 12 and the second damping mass 14, the third elastic element 16 is glued to both the support structure 12 and the third damping mass 14, and so on. In so doing, each elastic element 16 supports a respective damping mass 14 on the support structure 12, so as to keep said mass free to vibrate or oscillate freely with respect to the support structure 12.

For this purpose, the elastic elements 16 are made of a polymeric material.

In a preferable embodiment shown in the figures, the elastic elements 16 are made as a parallelepiped, or a plate, or a layer of elastic material which may be glued to the two opposite faces in order to be connected on one side to a particular damping mass 14 and on the other side to the support structure 12.

Even more preferably, for each n from 2 to N (where N is the number of damping masses 14 or elastic elements 16), each n-th elastic element 16 comprises separate portions in the form of a parallelepiped, or of a plate, preferably two separate portions 16a and 16b, even more preferably two equal separate portions 16a and 16b.

Clearly, depending on the required shape and on the shape of the support structure 12, different shapes are possible for the damping masses 14 and for the elastic elements 16, but the relative arrangement of the damping masses 14 and the respective elastic elements 16 is always such that, except for the first damping mass 14, the successive damping masses 14 are arranged telescopically, or at least partially surrounding a preceding damping mass 14 in a radial or lateral or transverse direction, and always such that the elastic connection between the damping mass 14 and the support structure 12 is ensured by a respective elastic element 16 (optionally provided in the form of various separate elastic element portions 16a 16b) which is arranged therebetween and glued to both in order to allow the respective damping mass 14 to vibrate or oscillate freely with respect to the support structure 12.

The mass $m_n$ of each damping mass 14 and the stiffness $k_n$ of each respective elastic element 16 are determined during the design phase such that the system formed by a damping mass 14 and by the particular elastic element 16 is adapted to damp a specific frequency. In particular, when fi, is the frequency which vibrations are intended to be damped by a respective pair formed by the n-th damping mass 14 and by the respective n-th elastic element 16, the respective mass $m_n$ and the respective stiffness $k_n$ are selected such that the following formula is satisfied:

$$f_i = BPF_i = \frac{1}{2\pi}\sqrt{\frac{k_n}{m_n}}$$

In this way, each respective pair formed by the n-th damping mass 14 and by the respective n-th elastic element 16 will be adapted to damp a respective frequency $f_i$.

For example, if an elastic stiffness k common to all the elastic elements 16 is fixed, for each n from 2 to N, the n-th mass $m_n$ of each damping mass 14 of said plurality of damping masses 14 may be provided as a multiple of the mass mi of the first damping mass 14, for example an increasing multiple. The damping masses 14 are preferably such that the mass $m_n$ of each n-th damping mass 14 arranged further inward with respect to the N-th damping mass is inversely proportional to the square of the i-th order of the blade passing frequency $BPF_i$, the vibrations of which said n-th damping mass 14 is intended to damp.

The damping device 10 according to the invention may be applied in particular to an aircraft comprising an engine component that comprises a plurality of blades and is adapted to rotate about an axis of rotation thereof to provide thrust to said aircraft.

In the context of the invention, 'engine component' is understood to include propellers, even of turboprops, rotors, propulsion rotors for helicopters or drones, compressors, in particular parts of turbojet or turboprop engines, and more generally any component comprising a plurality of blades or vanes which rotate at a predetermined rotational frequency in a manner that may cause noise.

In this case, the damping device 10 is characterized in that, for each n from 1 to N, the n-th mass $m_n$ of each damping mass 14 and the n-th stiffness $k_n$ of the respective elastic element 16 supporting this damping mass 14 on the support structure 12 are such that the square root of the ratio of said n-th stiffness to said n-th mass is proportional to a different blade passing frequency ($BPF_1$, $BPF_2$, $BPF_3$, ..., $BPF_i$) of said engine component. Substantially, therefore, each damping mass 14 - elastic element 16 pair has a ratio between the stiffness and the mass that is selected according to a different blade passing frequency ($BPF_i$), a component of the vibration to be damped.

In particular, preferably, for each n from 1 to N, the n-th mass $m_n$ of each damping mass 14 and the n-th stiffness $k_n$ of the respective elastic element 16 supporting this damping mass 14 on the support structure 12 are such that the square root of the ratio of said n-th stiffness to said n-th mass is proportional to the N-n+1-th (N minus n plus 1) blade passing frequency ($BPF_{N-n+1}$). Therefore, for example, in the case where N = 2, or in the case where the device comprises only two damping masses 14 and two respective elastic elements 16, the mass mi of the first damping mass 14 and the stiffness $k_1$ of the first elastic element 16 supporting the first damping mass 14 on the support structure 12 are such that the square root of the ratio of said first stiffness $k_1$ and said first mass mi is proportional to the second blade passing frequency $BPF_2$, and the second damping mass 14 and the stiffness $k_2$ of the second elastic element 16 supporting the second damping mass 14 on the support structure 12 are such that the square root of the ratio of said second stiffness $k_2$ and said second mass $m_2$ is proportional to the first blade passing frequency $BPF_1$.

For example, if the damping device 10 according to the invention having three (N = 3) damping masses 14, as is shown for example in Fig. 3, is used, the masses $m_n$ and the stiffnesses $k_n$ are selected such that the square root of the ratio of the stiffness $k_1$ of the first elastic element 16 and the mass mi of the first damping mass mi is proportional to the third BPF ($BPF_3$), and that the square root of the ratio of the stiffness $k_2$ of the second elastic element 16 and the mass $m_2$ of the second damping mass $m_2$ is proportional to the second BPF ($BPF_2$), and that the square root of the ratio of the stiffness $k_3$ of

the third elastic element 16 and the mass $m_3$ of the third damping mass $m_3$ is proportional to the first BPF (BPFi). In a manner which is obvious per se, a person skilled in the art will be able to determine the masses and the stiffnesses required for damping vibrations at other frequencies, using a greater number of damping masses 14 and of respective elastic elements 16.

Clearly, this teaching may also be applied to different engine components such as those set out above.

As may be seen from the preceding description, by virtue of the damping device according to the invention, the objects of the above-described invention may be fully achieved, resulting in several advantages.

In particular, the invention provides an improved passive damping device relative to the prior art.

Firstly, by virtue of using a plurality of damping masses and a plurality of respective elastic elements which are independent of one another, it is possible to damp vibrations at various frequencies simultaneously, and it is no longer necessary to select which frequency to damp.

Moreover, as a result of the 'telescopic' arrangement of the damping masses, the damping device according to the invention is particularly suitable for aeronautical applications where the requirement for small dimensions is of maximum importance.

Without prejudice to the principle of the invention, the embodiments and the details of construction may vary widely with respect to that which has been described and illustrated purely by way of non-limiting example, without thereby departing from the scope of protection of the invention as defined in the appended claims.

**Claims**

1.  Passive multi-frequency damping device (10) for damping vibrations of an aircraft, the damping device (10) comprising:

    a support structure (12);
    a plurality of N damping masses (14) of a metallic material, each one having a respective n-th mass ($m_n$), wherein N is a natural number greater than or equal to 2, and n is a natural number from 1 to N;
    a plurality of N elastic elements (16) each one having a respective n-th stiffness ($k_n$);
    wherein each n-th elastic element (16) is glued to both the support structure (12) and a respective n-th damping mass (14) to support said respective n-th damping mass (14) on the support structure (12) so that the former is free to vibrate relative to the latter; and
    wherein, for each n from 2 to N, each n-th damping mass (14) of said plurality of damping masses (14) is arranged to at least partially surround an n-1-th damping mass (14) of said plurality of damping masses (14), **characterized in that** the first damping mass (14) has a cylindrical shape with a first height ($h_1$) and with a semi-circular cross section, or it has a solid semi-cylindrical shape, and wherein each one of the remaining N-1 damping masses (14) of said plurality of damping masses (14) has a cylindrical shape with a respective height ($h_n$) and with a cross-section of arc of, or sector of, annulus, or has a hollow, semi-cylindrical shape.

2.  Damping device according to claim 1, wherein for each n from 2 to N, the cross-section of arc of, or sector of, annulus of the n-th damping mass (14) has an inner radius ($r_n$) substantially equal to, or slightly greater than, an outer radius ($r_{n-1}$) of the n-1-th damping mass (14).

3.  Damping device according to claim 2, wherein the first height ($h_n$) of the first damping mass (14) and the respective heights ($h_n$) of the other N-1 damping masses (14) of the plurality of damping masses (14) are all equal.

4.  Damping device according to any of the preceding claims, wherein, for each n from 2 to N, each n-th elastic element (16) adapted to support a respective n-th damping mass (14) of said plurality of damping masses (14) comprises separate portions (16a, 16b) shaped as plates, preferably two equal separate portions (16a, 16b).

5.  Damping device according to any of the preceding claims, wherein, for each n from 2 to N, the n-th mass ($m_n$) of each damping mass (14) of said plurality of damping masses (14) is a multiple of the mass (mi) of the first damping mass (14).

6.  Damping device according to any of the preceding claims, wherein the damping masses (14) are made of tungsten.

7.  Aircraft comprising:

    an engine component, comprising a plurality of blades and adapted to rotate about an axis of rotation thereof to provide thrust to said aircraft; and
    a damping device (10) according to any of the preceding claims;

    **characterized in that**, for each n from 1 to N, the n-th mass ($m_n$) of the n-th damping mass (14) and the n-th stiffness ($k_n$) of the respective n-th elastic element (16) supporting said n-th damping mass (14) on the support structure (12) are such that the square root of the ratio of said n-th stiffness ($k_n$) to said n-th mass ($m_n$) is proportional to a different blade passing frequency ($BPF_1$, $BPF_2$, $BPF_3$, ..., $BPF_i$) of said engine component.

8. Aircraft according to claim 7, wherein for each n from 1 to N, the n-th mass ($m_n$) of the n-th damping mass (14) and the n-th stiffness ($k_n$) of the respective n-th elastic element (16) supporting said damping mass (14) on the support structure (12) are such that the square root of the ratio of said n-th stiffness to said n-th mass is proportional to the N-n+1-th blade passing frequency ($BPF_{N-n+1}$).

9. Aircraft according to claim 7 or to claim 8, wherein the engine component is a rotor, a propeller or a compressor.

**Patentansprüche**

1. Passive Multifrequenzdämpfungsvorrichtung (10) zum Dämpfen von Schwingungen eines Flugzeugs, mit:

    einer Stützstruktur (12);
    einer Mehrzahl von N Dämpfungsmassen (14) eines metallischen Materials, bei denen jede eine jeweilige n-te Masse ($m_n$) aufweist, wobei N eine natürliche Zahl größer als oder gleich 2 ist, und n eine natürliche Zahl von 1 bis N ist;
    einer Mehrzahl von N elastischen Elementen (16), von denen jedes eine jeweilige n-te Steifigkeit ($k_n$) aufweist;
    bei der jedes n-te elastische Element (16) an sowohl die Stützstruktur (12) als auch eine jeweilige n-te Dämpfungsmasse (14) zum Abstützen der jeweiligen n-ten Dämpfungsmasse (14) auf der Stützstruktur (12) so, dass die erstere frei ist, relativ zu der letzteren zu schwingen, geklebt ist; und
    bei der, für jedes n von 2 bis N, jede n-te Dämpfungsmasse (14) der Mehrzahl von Dämpfungsmassen (14) so angeordnet ist, dass sie eine n-1-te Dämpfungsmasse (14) der Mehrzahl von Dämpfungsmassen (14) zumindest teilweise umgibt, **dadurch gekennzeichnet, dass** die erste Dämpfungsmasse (14) eine zylindrische Form mit einer ersten Höhe ($h_1$) und mit einem halbkreisförmigen Querschnitt aufweist, oder sie eine massive halbzylindrische Form aufweist, und bei der jede der verbleibenden N-1 Dämpfungsmassen (14) der Mehrzahl von Dämpfungsmassen (14) eine zylindrische Form mit einer jeweiligen Höhe ($h_n$) und mit einem Bogen- oder Sektor- oder Ringquerschnitt aufweist oder eine hohle halbzylindrische Form aufweist.

2. Dämpfungsvorrichtung nach Anspruch 1, bei der für jedes n von 2 bis N der Bogen- oder Sektor- oder Ringquerschnitt der n-ten Dämpfungsmasse (14) einen Innenradius ($r_n$) im Wesentlichen gleich oder geringfügig größer als ein Außenradius ($r_{n-1}$) der n-1-ten Dämpfungsmasse (14) aufweist.

3. Dämpfungsvorrichtung nach Anspruch 2, bei der die erste Höhe ($h_n$) der ersten Dämpfungsmasse (14) und die jeweiligen Höhen ($h_n$) der anderen N-1 Dämpfungsmassen (14) der Mehrzahl von Dämpfungsmassen (14) alle gleich sind.

4. Dämpfungsvorrichtung nach einem der vorhergehenden Ansprüche, bei der, für jedes n von 2 bis N, jedes n-te elastische Element (16), das dazu angepasst ist, eine jeweilige n-te Dämpfungsmasse (14) der Mehrzahl von Dämpfungsmassen (14) abzustützen, separate Abschnitte (16a, 16b), die als Platten geformt sind, vorzugsweise zwei gleiche separate Abschnitte (16a, 16b), aufweist.

5. Dämpfungsvorrichtung nach einem der vorhergehenden Ansprüche, bei der, für jedes n von 2 bis N, die n-te Masse ($m_n$) jeder Dämpfungsmasse (14) der Mehrzahl von Dämpfungsmassen (14) ein Vielfaches der Masse (mi) der ersten Dämpfungsmasse (14) ist.

6. Dämpfungsvorrichtung nach einem der vorhergehenden Ansprüche, bei der die Dämpfungsmassen (14) aus Wolfram gemacht sind.

7. Flugzeug mit:

    einer Motorkomponente, die eine Mehrzahl von Blättern aufweist und dazu angepasst ist, sich zum Vorsehen eines Schubs für das Flugzeug um eine Drehachse davon zu drehen; und
    einer Dämpfungsvorrichtung (10) nach einem der vorhergehenden Ansprüche;
    **dadurch gekennzeichnet, dass**, für jedes n von 1 bis N, die n-te Masse ($m_n$) der n-ten Dämpfungsmasse (14) und die n-te Steifigkeit ($k_n$) des jeweiligen n-ten elastischen Elements (16), das die n-te Dämpfungsmasse (14) auf der Stützstruktur (12) abstützt, derart sind, dass die Quadratwurzel des Verhältnisses der n-ten Steifigkeit ($k_n$) zu der n-ten Masse ($m_n$) proportional zu einer unterschiedlichen Blattdurchlauffrequenz ($BPF_1$, $BPF_2$, $BPF_3$, ..., $BPF_i$) der Motorkomponente ist.

8. Flugzeug nach Anspruch 7, bei dem für jedes n von 1 bis N die n-te Masse ($m_n$) der n-ten Dämpfungsmasse (14) und die n-te Steifigkeit ($k_n$) des jeweiligen n-ten elastischen Elements (16), das die Dämpfungsmasse (14) auf der Stützstruktur (12) abstützt, derart sind, dass die Quadratwurzel des Verhältnisses der n-ten Steifigkeit zu der n-ten Masse proportional zu der N-n+1-ten Blattdurchlauffrequenz ($BPF_{N-n+1}$) ist.

9. Flugzeug nach Anspruch 7 oder Anspruch 8, bei dem die Motorkomponente ein Rotor, ein Propeller oder ein Kompressor ist.

## Revendications

1. Dispositif d'amortissement multifréquence passif (10) pour amortir des vibrations d'un aéronef, le dispositif d'amortissement (10) comprenant :

    une structure de soutien (12) ;
    une pluralité de N masses d'amortissement (14) d'un matériau métallique, chacune ayant une $n^{ième}$ masse ($m_n$) respective, dans lequel N est un nombre naturel supérieur ou égal à 2, et n est un nombre naturel de 1 à N ;
    une pluralité de N éléments élastiques (16) ayant chacun une $n^{ième}$ rigidité ($k_n$) respective ;
    dans lequel chaque $n^{ième}$ élément élastique (16) est collé à la fois à la structure de soutien (12) et à une $n^{ième}$ masse d'amortissement (14) respective pour soutenir ladite $n^{ième}$ masse d'amortissement (14) respective sur la structure de soutien (12) de sorte que la première soit libre de vibrer par rapport à la dernière ; et
    dans lequel, pour chaque n de 2 à N, chaque $n^{ième}$ masse d'amortissement (14) de ladite pluralité de masses d'amortissement (14) est agencée pour entourer au moins partiellement une $n-1^{ième}$ masse d'amortissement (14) de ladite pluralité de masses d'amortissement (14), **caractérisé en ce que** la première masse d'amortissement (14) a une forme cylindrique avec une première hauteur ($h_1$) et avec une section transversale semi-circulaire, ou a une forme semi-cylindrique solide, et dans lequel chacune des N-1 masses d'amortissement (14) restantes de ladite pluralité de masses d'amortissement (14) a une forme cylindrique avec une hauteur ($h_n$) respective et avec une section transversale en arc, ou en secteur, en anneau, ou a une forme semi-cylindrique creuse.

2. Dispositif d'amortissement selon la revendication 1, dans lequel pour chaque n de 2 à N, la section transversale en arc, ou en secteur, en anneau de la $n^{ième}$ masse d'amortissement (14) a un rayon interne ($r_n$) sensiblement égal à, ou légèrement supérieur à, un rayon externe ($r_{n-1}$) de la $n-1^{ième}$ masse d'amortissement (14).

3. Dispositif d'amortissement selon la revendication 2, dans lequel la première hauteur ($h_n$) de la première masse d'amortissement (14) et les hauteurs ($h_n$) respectives des N-1 autres masses d'amortissement (14) de la pluralité de masses d'amortissement (14) sont toutes égales.

4. Dispositif d'amortissement selon l'une quelconque des revendications précédentes, dans lequel, pour chaque n de 2 à N, chaque $n^{ième}$ élément élastique (16) adapté à soutenir une $n^{ième}$ masse d'amortissement (14) respective de ladite pluralité de masses d'amortissement (14) comprend des portions séparées (16a, 16b) formées comme des plaques, de préférence deux portions séparées égales (16a, 16b).

5. Dispositif d'amortissement selon l'une quelconque des revendications précédentes, dans lequel, pour chaque n de 2 à N, la $n^{ième}$ masse ($m_a$) de chaque masse d'amortissement (14) de ladite pluralité de masses d'amortissement (14) est un multiple de la masse ($m_1$) de la première masse d'amortissement (14).

6. Dispositif d'amortissement selon l'une quelconque des revendications précédentes, dans lequel les masses d'amortissement (14) sont réalisées en tungstène.

7. Aéronef comprenant :

    un composant de moteur, comprenant une pluralité de pales et adapté à tourner autour d'un axe de rotation de celui-ci pour fournir une poussée audit aéronef ; et
    un dispositif d'amortissement (10) selon l'une quelconque des revendications précédentes ; **caractérisé en ce que**, pour chaque n de 1 à N, la $n^{ième}$ masse ($m_n$) de la $n^{ième}$ masse d'amortissement (14) et la $n^{ième}$ rigidité ($k_n$) du $n^{ième}$ élément élastique (16) respectif soutenant ladite $n^{ième}$ masse d'amortissement (14) sur la structure de soutien (12) sont telles que la racine carrée du rapport entre ladite $n^{ième}$ rigidité ($k_n$) et ladite $n^{ième}$ masse ($m_n$) est proportionnelle à une fréquence de passage de pale différente ($BPF_1$, $BPF_2$, $BPF_3$, ..., $BPF_i$) dudit composant de moteur.

8. Aéronef selon la revendication 7, dans lequel pour chaque n de 1 à N, la $n^{ième}$ masse ($m_n$) de la $n^{ième}$ masse d'amortissement (14) et la $n^{ième}$ rigidité ($k_n$) du $n^{ième}$ élément élastique (16) respectif soutenant ladite masse d'amortissement (14) sur la structure de soutien (12) sont telles que la racine carrée du rapport entre ladite $n^{ième}$ rigidité et ladite $n^{ième}$ masse est proportionnelle à la $N-n+1^{ième}$ fréquence de passage de pale ($BPF_{N-n+1}$).

**9.** Aéronef selon la revendication 7 ou selon la revendication 8, dans lequel le composant de moteur est un rotor, une turbine ou un compresseur.

FIG. 1

FIG. 2

FIG. 3

EP 4 118 357 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2087669 C
- US 20190277364 A1
- DE 102008058470 A1
- US 2019003547 A1
- DE 1953028 U